# EUROPÄISCHE PATENTSCHRIFT

(11) **EP 3 686 039 B1**
(45) Veröffentlichungstag und Bekanntmachung des Hinweises auf die Patenterteilung: **02.11.2022**
(21) Anmeldenummer: 20153202.5
(22) Anmeldetag: 22.01.2020
(51) Int. Cl.: B60G 11/27, F16K 11/20, F16K 27/00, F16K 27/02, F16K 27/10

(54) **VENTILBLOCK MIT FÜLLANSCHLUSS**
VALVE BLOCK WITH FILLING CONNECTION
BLOC DE SOUPAPE POURVU DE RACCORD DE REMPLISSAGE

(30) Priorität: 24.01.2019 DE 102019101791
(43) Veröffentlichungstag der Anmeldung: 29.07.2020
(73) Patentinhaber: RAPA Automotive GmbH & Co. KG, 95100 Selb (DE)
(72) Erfinder: Schlick, Matthias, 95100 Selb (DE)
(74) Vertreter: Klunker IP Patentanwälte PartG mbB

(56) Entgegenhaltungen:
- EP-A1- 1 878 958
- WO-A1-2009/095038
- DE-A1-102006 060 923
- DE-B3-102016 120 759

## Beschreibung

Die Erfindung betrifft einen Ventilblock, ein Luftfederungssystem und ein Verfahren zum Herstellen des Ventilblocks.

Bei Fahrzeugen mit Luftfederung wird eine Gegenkraft zu den fahrdynamischen Kräften am jeweiligen Rad oder der jeweiligen Achse mithilfe von Druckluft erzeugt. Dabei lässt sich der Druck in den Luftfederbeinen bzw. den Luftbälgen des Fahrzeugs beispielsweise über elektromagnetische Steuerventile einstellen. Dadurch können die Fahrwerkseigenschaften und/oder der Fahrkomfort gezielt eingestellt werden.

Derartige Fahrzeuge umfassen entsprechend ein Luftfederungssystem mit beispielsweise einem zentralen Ventilblock mit Steuer-, Regel- bzw. Magnetventilen, an dessen Anschlüssen verschiedene Verbraucher, wie Luftfederbeine bzw. -bälge und ggf. ein Drucklufttank bzw. -speicher, sowie ein Kompressor angeschlossen sind, der im Betrieb für den gewünschten Systemdruck bzw. Druck in den Verbrauchern, insbesondere im Drucklufttank sorgt.

Zur Herstellung des Ventilblocks wird beispielsweise ein Ventilkörper welcher bereits die Druckversorgungs- und Verbraucheranschlüsse oder Stutzen bzw. Gehäuse dafür enthält mit Magnetventilen bestückt, üblicherweise mit einem Magnetventil pro Druckversorgungs- bzw. Verbraucheranschluss. Nach elektrischer Kontaktierung der Magnetventile und ggf. Anbringen eines entsprechenden elektrischen Steckers wird der Ventilkörper bzw. die Magnetventile mit einer Vergussmasse, beispielsweise Zwei-Komponenten-Polyurethan-Vergussmasse, vergossen. Derartige Ventilblöcke werden beispielsweise an Kompressorenhersteller geliefert, welche dann den Einbau der Ventilblöcke im Fahrzeug vornehmen. Bei der Fahrzeugendmontage muss das Luftfederungssystem initial mit Druckluft befüllt werden. Obwohl derartigen Luftfederungssysteme üblicherweise über einen eigenen Kompressor im Fahrzeug verfügen, kann dieser nicht zum initialen Befüllen des Systems verwendet werden, da am Kompressor üblicherweise auch ein Lufttrockner beispielsweise in Granulatbauweise vorgesehen ist. Dieser würde mit der zur initialen Befüllung des Luftfederungssystems notwendigen Luftmenge unzulässig mit Feuchtigkeit gesättigt und würde im späteren Einsatz entsprechend versagen, da die Lufttrocknungseinheit so dimensioniert ist, dass er sich nur im Zusammenspiel mit angesaugter und wieder abgegebener Luft regeneriert. Die zulässigen Leckagen der Systemkomponenten können dabei verkraftet werden.

Daher erfolgt die initiale Befüllung mit Hilfe einer Befüllstation während der Fahrzeugendmontage. Dabei ist das Luftfederungssystem bereits komplett - typischerweise bis auf den Druckversorgungs- bzw. P-Anschluss am Ventilblock - im Fahrzeug verbaut. Dieser P-Anschluss des Ventilblocks wird mit einem Fülladapter verbunden und darüber Druckluft in das System eingebracht. Dabei werden Elektromagnetwegeventile zu den Luftfederbälgen geöffnet, wobei darüber die Druckluft in die Luftfederbeine bzw. Luftbälge strömt. Ist der gewünschte Fülldruck erreicht, werden die Magnetventile zu den Luftfederbeinen wieder geschlossen und - wenn vorhanden - ein Drucklufttank des Systems in gleicher Weise befüllt. Dieser Druckluftspeicher wird üblicherweise mit einem höheren Druckniveau befüllt, daher erfolgt die Befüllung getrennt. Ist der gewünschte Speicherdruck erreicht wird das Magnetventil zum Speicher geschlossen und der Fülladapter drucklos geschaltet und wieder vom P-Anschluss des Ventilblocks abgenommen. Nun wird abschließend die pneumatische Verbindung zwischen Kompressor und Ventilblock am P-Anschluss des Ventilblocks befestigt.

Bei diesem Vorgehen ist es immer erforderlich, dass das Luftfederungssystem vormontiert wird, befüllt wird und erst nach dem Befüllen die letzten Montageschritte ausgeführt werden, wie beispielsweise einen Druckluftschlauch im P-Anschluss zu stecken. Es ist nicht möglich das Luftfederungssystem komplett fertig zu montieren und erst nachgelagert zu befüllen.

Ein Ventilblock der eingangs genannten Art ist beispielsweise aus der DE 10 2016 120 759 B3 bekannt. Ein Mehrwegeventil mit Magnetventilen weist die Gestalt eines Ventilblocks auf, der einen Ventilkörper mit Anschlüssen zur Druckversorgung und zu verschiedenen Verbraucher (Druckspeicher und vordere und hintere, rechte und linke Federbeine eines Fahrzeugs) umfasst. Ein Magnetventil für ein Luftfederungssystem ist beispielsweise in der DE 10 2016 119 990 A1 gezeigt und beschrieben.

Der Erfindung liegt die Aufgabe zugrunde, das Befüllen eines komplett vormontierten Luftfederungssystems zu ermöglichen.

Diese Aufgabe wird durch die Merkmale der unabhängigen Ansprüche gelöst.

Die Grundidee der vorliegenden Erfindung liegt in dem Vorsehen eines zusätzlichen Füllanschlusses an einem Ventilblock für ein Luftfederungssystem. Die Erfindung beruht somit auf den Gedanken, einen separaten Strömungspfad zum Befüllen des Luftfederungssystems mit Hilfe einer externen Befüllvorrichtung vorzusehen und somit einen nachträglichen Montageschritt des Luftfederungssystems nach dem Befüllen des Luftfederungssystems zu vermeiden, wobei die Befüllmechanik Teil des Luftfederventilblocks bzw. dessen Ventilkörpers ist. Die externe Befüllvorrichtung ist dabei insbesondere nicht der im Fahrzeug verbaute Kompressor.

Entsprechend umfasste ein erfindungsgemäßer Ventilkörper, der für einen Ventilblock eines Luftfederungssystems eines Fahrzeugs vorgesehen ist, neben den bekannten Druckversorgungs- und/oder Verbraucheranschlüssen bzw. Gehäusen für diese, ein Füllanschlussgehäuse zum Ausbilden eines Füllanschlusses. Entsprechend ist das Füllanschlussgehäuse zum Einbringen eines Füllventils ausgebildet. Das Füllanschlussgehäuse bildet eine zusätzliche Öffnung in dem Ventilkörper für den erwähnten zusätzlichen bzw. separaten Strömungspfad und kann bereits Anschlüsse für eine korrespondierende externe Befüllvorrichtung aufweisen. Die Innenseite des Füllanschlussgehäuses des Ventilkörpers ist beispielsweise zylindersymmetrisch ausgebildet, ggf. mit verschiedenen Innendurchmessern entlang einer Längsbzw. Symmetrieachse des Füllanschlussgehäuses, die insbesondere zur Öffnung hin zunehmen, beispielsweise stetig, stufenweise und/oder kontinuierlich.

Ein erfindungsgemäßer Ventilblock für ein Luftfederungssystem für ein Fahrzeug umfasst entsprechend Druckversorgungs- und/oder Verbraucheranschlüsse sowie einen Füllanschluss der mit einem Füllventil bestückt ist und zum Anschluss einer externen Befüllvorrichtung vorgesehen ist. Zur Schaffung der Druckversorgungs- und/oder Verbraucheranschlüsse sind gegebenenfalls in die entsprechenden Druckversorgungs- und/oder Verbraucheranschlussgehäuse entsprechende Anschlussadapter eingebracht, beispielsweise eingeschraubt.

Vorteile der Erfindung sind also, dass sowohl eine komplette Montage des Luftfederungssystems vor dem initalen Befüllen des Luftfederungssystems über den erfindungsgemäßen Füllanschluss möglich ist, da sämtliche Leitungen des Luftfederungssystems (Verbraucherleitungen, Druckversorgungsleitung) bereits vor dem initalen Befüllen an dem Ventilblock angeschlossen werden können und nicht beispielsweise der P-Anschluss freigehalten werden muss, als auch dass der Luftfederkompressor bzw. die ihm zugeordnete Lufttrocknungseinheit für die Befüllung nicht eingesetzt werden muss.

Ferner wird die Gefahr den P-Anschluss während der initialen Befüllung zu beschädigen vermieden. Letztendlich ermöglicht der erfindungsgemäße zusätzliche Füllanschluss auch eine spätere erneute Befüllung (was vorliegend ebenfalls als initiale Befüllung verstanden wird) des Luftfederungssystems, beispielsweise im Rahmen einer Reparatur, ohne dass das Luftfederungssystem insbesondere am P-Anschluss demontiert werden muss. Mit der vorliegenden Erfindung ist es nun möglich, das Luftfederungssystem am Montageband komplett fertig zu montieren und erst in einem nachgelagerten Schritt mit Druckluft zu befüllen.

In einer vorteilhaften Ausgestaltung ist der Ventilkörper als Spritzgussteil, insbesondere als Kunststoffspritzgussteil etwa aus einem thermoplastischen Kunststoff und/oder einstückig ausgebildet. Der Füllanschluss bzw. ein Gehäuse des Füllanschlusses ist bevorzugt in dem Ventilkörper integriert und/oder einstückig mit dem Ventilkörper ausgebildet und/oder mit dem Ventilkörper fest verbunden und/oder an dem Ventilkörper angeformt. Weiterhin sind bevorzugt auch die Druckversorgungs- und/oder Verbraucheranschlüssen bzw. deren Gehäusen in dem Ventilkörper integriert, einstückig mit dem Ventilkörper ausgebildet und/oder mit dem Ventilkörper fest verbunden und/oder an dem Ventilkörper angeformt. Dadurch wird eine mechanische Schnittstelle zwischen Füll-, Druckversorgungs- und/oder Verbraucheranschlüssen bzw. deren Gehäusen und dem Ventilblock bzw. dem Ventilkörper vermieden, wodurch wiederum eine hohe mechanische Festigkeit der Füll-, Druckversorgungs- und/oder Verbraucheranschlüssen erreicht wird. Ferner wird eine potentielle Leckagestelle zwischen Ventilblock bzw. Ventilkörper und Füllanschluss sowie ggf. auch den Verbraucheranschlüssen und dem Druckversorgungsanschluss vermieden.

In einer vorteilhaften Weiterbildung des erfindungsgemäßen Ventilblockes ist vorgesehen, dass der Füllanschluss ein Füllventil aufweist, das in dem Gehäuse des bzw. im Innern des Gehäuses des Füllanschlusses angeordnet ist und zum Anschluss einer, insbesondere externen, Befüllvorrichtung eingerichtet ist, wobei das Füllventil vorzugsweise durch die externe Befüllvorrichtung mechanisch entriegelbar bzw. betätigbar bzw. öffenbar ist. Entsprechend ist die Befüllmechanik in Form des Füllventils in dem Ventilblock bzw. Ventilblockkörper integriert, wodurch der Strömungspfad durch den Füllanschluss beim Einstecken eines Füllstutzens oder dergleichen der externen Befüllvorrichtung geöffnet wird.

Weiterhin ist das Füllventil bevorzugt als vollständig mechanisches bzw. rein mechanisches Ventil, insbesondere ohne aktive (Aktuator)-Komponenten, das heißt als passives Ventil ausgestaltet, beispielsweise im Gegensatz zu Steuerventilen, die den Druckversorgungs- und/oder Verbraucheranschlüssen zugeordnet sind. Entsprechend wird - beispielsweise im Vergleich mit bekannten Ventilblöcken - keine zusätzliche Ansteuerung benötigt und der erfindungsgemäße Ventilblock kann an Stelle herkömmlicher Ventilblöcke verwendet werden ohne Anpassungen an umgebenden Bauteilen, beispielsweise einer Ventilblock-Ansteuerung erforderlich zu machen.

In einer weiteren vorteilhaften Weiterbildung des erfindungsgemäßen Ventilblockes ist vorgesehen, dass das Füllventil einen axial verschiebbaren Dichtkolben aufweist, der in einer Schließposition den Strömungspfad durch den Füllanschluss schließt und in einer Öffnungsposition den Strömungspfad durch den Füllanschluss öffnet, wobei das Füllventil bevorzugt derart eingerichtet ist, dass der Dichtkolben bei bzw. durch Anschluss einer externen Befüllvorrichtung mechanisch von der Schließposition in die Öffnungsposition bewegt werden kann und/oder wobei der Dichtkolben eingerichtet ist durch einen Systemdruck, das heißt den Druck im Innern des Ventilblocks bzw. des Luftfederungssystems in die Schließposition gedrängt zu werden und/oder wobei das Füllventil ein Federbauteil, insbesondere eine Druckfeder bzw. Schraubenfeder, umfasst, das/die den Dichtkolben in die Schließposition drängt. Hierfür ist es günstig, wenn der Dichtkolben von Haltebauteilen geführt wird, insbesondere von einem, zwei oder mehr Haltering(en) und/oder einer Scheibe bzw. Distanzscheibe, wobei die Haltebauteile bevorzugt direkt an dem Gehäuse des Füllanschlusses befestigt sind und besonders bevorzugt als selbsthaltende Einpressteile ausgebildet sind. Durch diese integrierten Elemente werden sowohl die Bedienung und Montage vereinfacht als auch die Herstellungskosten gesenkt. Die Haltebauteile des Füllanschlusses sind weisen dabei bevorzugt eine sägezahnförmig ausgestaltete Außenseite auf, die die Verankerung der Haltebauteile auf der Innenseite bzw. -wandung des Füllanschlussgehäuses sicherstellt. Die Innenseite des Gehäuses des Füllanschlusses weist bevorzugt einen Durchmesser im Bereich zwischen 5 und 50 mm auf. Dabei beträgt der Durchmesser beispielsweise 5, 8,10,15, 20, 30, 40 oder 50 mm, wobei jeder der genannten Bereiche auch eine Ober- oder Untergrenze des genannten Bereichs sein kann. Der Systemdruck im Betrieb liegt dabei bevorzugt im Bereich zwischen 5 und 50 bar und beträgt beispielsweise 5, 8, 10, 15, 20, 30, 40 oder 50 bar, wobei jeder der genannten Bereiche auch eine Ober- oder Untergrenze des genannten Bereichs sein kann.

Durch die externe Befüllvorrichtung wird also der Füllanschluss mechanisch entriegelt, das heißt der Dichtkolben des Füllventils wird zurückgeschoben, wodurch der für den Füllvorgang notwendige Strömungspfad freigegeben wird. Dadurch kann für den Fall einer Überfüllung, das heißt im Fall dass zu viel Druck im Luftfederungssystem vorhanden ist, diese überschüssige Druckluft durch den Füllanschluss auch wieder abgelassen werden. Die Aufnahmegeometrie für den Füllanschluss, das heißt das Gehäuse des Füllanschlusses, ist vorzugsweise so gestaltet das die einzelnen Bauteile des Füllventils zur Montage des Füllventils einzeln und/oder nacheinander in die Öffnung des Füllanschlussgehäuses eingesteckt werden können. Zudem kann der Füllanschluss bzw. das Füllventil so gestaltet sein, dass optisch erkennbar ist, ob der Dichtkolben sich in der geschlossenen Position befindet. Beispielsweise liegt der Dichtkolben bzw. dessen axiale Außenseite in der Schließposition des Füllventils bündig mit dem Ventilkörper bzw. dem Gehäuse des Füllanschlusses oder ragt über diesen hinaus. Diese Ausführungsform schafft mit wenig zusätzlichen Bauteilen und Aufwand eine effiziente Möglichkeit der Befüllung des Luftfederungssystems nach dessen Komplettmontage. Ferner kann dadurch jederzeit, auch nach z.B. einer Reparatur oder Wartung und dem damit verbundenen Entleeren des Systems eine Wiederbefüllung über den Füllanschluss erfolgen ohne Anschlüsse des Ventilblocks zu demontieren oder das Luftfederungssystem anderweitig zu zerlegen. Durch diese Ausführung wird außerdem erreicht, dass der Systemdruck im Luftfederungssystem schließend auf den Füllanschluss wirkt. Dadurch wird eine selbsttätige Verriegelung des Anschlusses ggf. auch ohne Druck- bzw. Schraubenfeder nach dem Füllvorgang erreicht. Auch zur eindeutigen Lagepositionierung des Kolbens und zur Unterstützung des Schließvorganges ist die Druck- bzw. Schraubenfeder vorteilhaft. Bevorzugt umfassen die Haltebauteile genau einen inneren Haltering, einen äußeren Haltering sowie eine dazwischen liegende Distanzscheibe. Die Distanzscheibe (auch als Abstandsring bezeichnet) ist bevorzugt ein Kunststoffspritzgussteil und weist eine Scheibenöffnung auf. Die äußere Fläche (Außenrand) der Distanzscheibe ist an einer Innenseite bzw. -fläche des Gehäuses des Füllventils angeordnet und eine innere Fläche (Innenrand) der Scheibenöffnung liegt an einer Außenfläche des Dichtkolbens an. Die Distanzscheibe hat hier beispielsweise eine Stützfunktion für die Dicht- bzw. O-Ringe und bewirkt eine Verbesserung der Führung des Dichtkolbens bei dessen axialer Verschiebung.

Eine besonders bevorzugte Werkstoffkombination ergibt sich, wenn der Dichtkolben aus Kunststoff ausgeführt ist und wenn die Haltebauteile aus Kunststoff und/oder aus Metall ausgeführt sind. Metallteile lassen sich dabei als einfache Drehteile fertigen. Die Kunststoffteile können im Spritzgussverfahren hergestellt werden.

Vorzugsweise weist das Füllventil des Füllanschlusses genau oder mindestens ein erstes Dichtungselement, vorzugsweise einen ersten O-Ring auf, das/der bevorzugt axial zwischen dem inneren und äußeren Haltering und/oder der Distanzscheibe angeordnet ist und/oder in der Schließposition des Füllventils radial zwischen Dichtkolben und Ventilblockkörper bzw. Ventilkörper angeordnet ist und an diesen anliegt, um den Dichtkolben gegenüber dem Ventilblockkörper bzw. Ventilkörper abzudichten. Diese Ausgestaltung kann bereits - je nach Umgebungsbedingungen - bereits eine ausreichende Abdichtung des Füllventils gewährleisten.

Verbessert wird die Abdichtung, wenn ein zweites, äußeres Dichtungselement, vorzugsweise ebenfalls ein O-Ring, vorgesehen ist, das/der in der Schließposition radial auf der Außenfläche des Dichtkolbens und/oder in einer Aussparung des äußeren Halterings angeordnet ist und bevorzugt von dem ersten Dichtungselement bzw. O-Ring durch die Distanzscheibe beabstandet ist. Somit ist der Füllanschluss sehr robust im Hinblick auf eine Leckage über der gesamten Lebensdauer. Der innere O-Ring ist die primäre Dichtung, welche das System abdichtet. Der äußere O-Ring dient als Schutz vor Umwelteinflüssen. Dadurch wird verhindert, dass die im Einbaubereich der Ventilblöcke typischerweise auftretenden Umwelteinflüsse, wie zum Beispiel, Schmutz und Salzwasser in den Füllanschluss eindringen. Die Verwendung von zwei O-Ringen schafft ein sehr robustes Dichtsystem.

In dem Ventilblock ist bevorzugt jedem Verbraucheranschluss und vorzugsweise auch dem Druckversorgungsanschluss jeweils ein Steuer- oder Regelventil, insbesondere ein Magnetventil, zugeordnet ist, wobei die Magnetventile bevorzugt mit Kunststoffspritzgussmasse, besonders bevorzugt mit einer Zwei-Komponenten-Kunststoffspritzgussmasse umspritzt sind.

In einer bevorzugten Ausgestaltung ist der Ventilblock mit dem Kompressor mechanisch fest verbunden. Dazu sind Ventilblock und Kompressor sowie ggf. die Lufttrocknungseinheit beispielsweise auf einem gemeinsamen Halter montiert.

Ein erfindungsgemäßes Luftfederungssystem umfasst einen wie oben beschriebenen Ventilblock sowie einen oder mehrere Verbraucher, der/die jeweils mit einem Verbraucheranschluss des Ventilblocks verbunden ist/ sind, sowie einen Kompressor, der mit dem Druckversorgungsanschluss des Ventilblocks verbunden ist, bevorzugt mechanisch fest verbunden ist, besonders bevorzugt auf einem gemeinsamen Halter montiert ist. Dabei sind als Verbraucher vorzugsweise ein oder mehrere Luftfederbeine oder -bälge und/oder ein Druckspeicher vorgesehen. Zwischen Kompressor und Druckversorgungsanschluss ist vorzugsweise eine Lufttrocknungseinheit angeordnet, vorzugsweise auf Granulatbasis.

Ein erfindungsgemäßes Verfahren zum Herstellen eines wie oben beschriebenen Ventilblocks umfasst die Schritte:
- Bereitstellen eines wie oben beschriebenen Ventilkörpers,
- Bestücken des Ventilkörpers mit Magnetventilen für die Druckversorgungs- und Verbraucheranschlüsse, bevorzugt mit genau einem Magnetventil pro Druckversorgungs- bzw. Verbraucheranschluss, und
- Bestücken des Füllanschlussgehäuses mit einem Füllventil zum Ausbilden des Füllanschlusses, wobei bevorzugt die Bauteile des Füllventils nacheinander bzw. einzeln nacheinander in das Füllanschlussgehäuse eingebracht werden, sowie bevorzugt den weiteren Schritt:
- Umspritzen zumindest der Magnetventile, bevorzugt der gesamten Einheit aus Ventilkörper und Magnetventilen, mit einer Kunststoffspritzgussmasse, besonders bevorzugt mit einer Zwei-Komponenten-Kunststoffspritzgussmasse.

In einem erfindungsgemäßen Verfahren zum Füllen eines wie oben beschriebenen Luftfederungssystems geschieht das Füllen über den Füllanschluss, insbesondere unter Umgehung der Lufttrocknungseinheit. Dadurch kann der Kompressor, wie gewohnt zur Druckregelung eingesetzt werden, ohne, dass die Funktion der Lufttrocknungseinheit durch die initiale Befüllung negativ beeinflusst wird.

Ausführungsbeispiele der Erfindung werden anhand der Zeichnungen näher erläutert, wobei weitere vorteilhafte Weiterbildungen der Erfindung und Vorteile derselben beschrieben sind. Es zeigen:
- Fig. 1: eine perspektivische Darstellung einer Ausführungsform eines erfindungsgemäßen Ventilblockes,
- Fig. 2: eine Schnittdarstellung des Füllanschlusses des Ventilblockes,
- Fig. 3a: eine schematische Darstellung des Füllanschlusses des Ventilblockes, wobei ein Füllventil geöffnet ist und ein Strömungsweg angedeutet ist,
- Fig. 3b: eine schematische Darstellung des Füllanschlusses des Ventilblockes, wobei das Füllventil geschlossen ist,
- Fig. 4: eine schematische Darstellung eines Luftfederungssystems,
- Fig. 5: eine perspektivische Darstellung eines Ventilblockes nach einem STAND DER TECHNIK, und
- Fig. 6: eine schematische Darstellung eines Luftfederungssystems nach einem STAND DER TECHNIK.

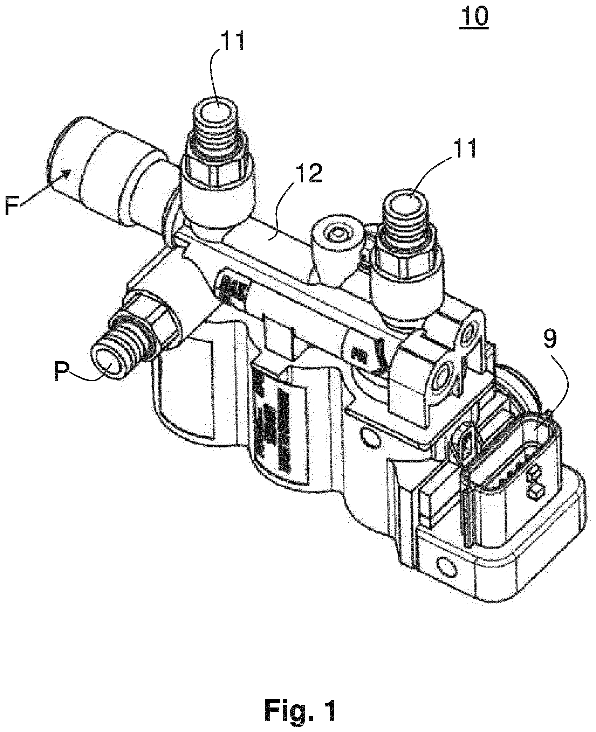

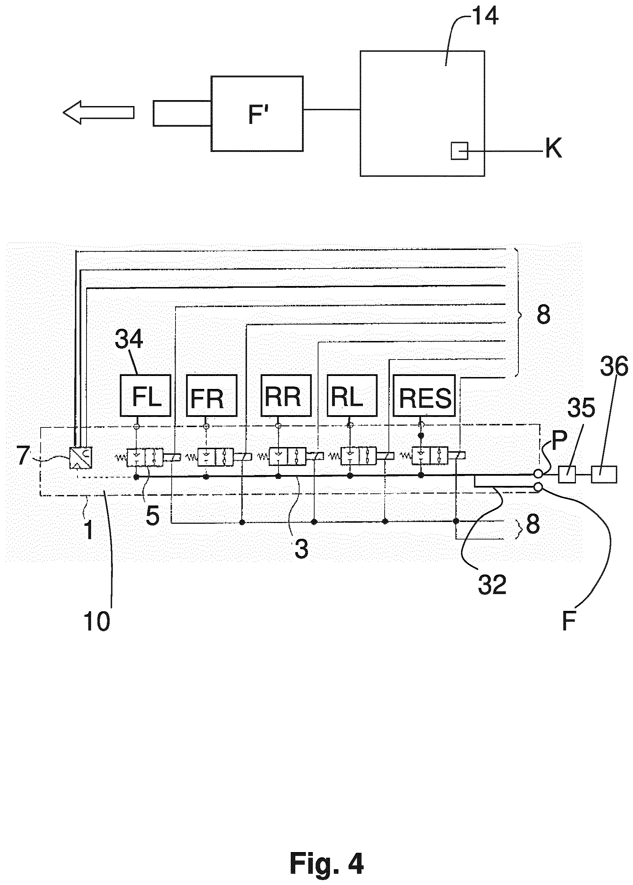

Fig. 1 zeigt einen erfindungsgemäßen Ventilblock 10 für ein Luftfederungssystem für ein Fahrzeug, z.B. für einen Pkw oder ein Nutzfahrzeug mit einem Ventilkörper 12. Der Ventilblock 10 bzw. dessen Ventilkörper 12 umfasst einen Druckversorgungsanschluss P und mehrere Verbraucheranschlüsse 11, bzw. RES, FL, FR, RL, RR, wie dies auch Fig. 4 zeigt. In der Ansicht von Fig. 1 sind zwei Verbraucheranschlüsse 11 erkennbar. In einer nicht dargestellten Ausführungsform umfasst der Ventilblock 10 neben dem Druckversorgungsanschluss P fünf Anschlüsse bzw. Verbraucheranschlüsse RES, FL, FR, RL, RR, jeweils für den Druckspeicher RES, das linke Vorderrad FL, das rechte Vorderrad FR, das linke Hinterrad RL und das rechte Hinterrad RR.

Wie die Figuren 1 und 4 veranschaulichen, weist der Ventilblock 10 bzw. dessen Ventilkörper 12 zudem einen Füllanschluss F auf.

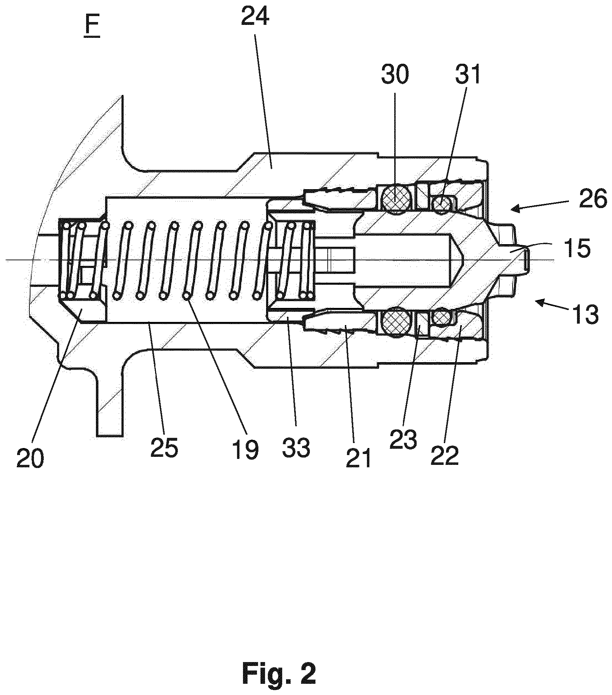

Der Ventilblock 10 und der Ventilkörper 12 sind jeweils Spritzgussteile. Wie am besten in Fig. 2 in Verbindung mit Fig. 1 zu erkennen ist, ist der Füllanschluss F in dem Ventilkörper 12 integriert und dessen Gehäuse 24 einstückig mit dem Ventilkörper 12 ausgebildet. Auch der Druckversorgungsanschluss P und die Verbraucheranschlüsse 11 sind in dem Ventilkörper 12 integriert, wie Fig. 1 zeigt.

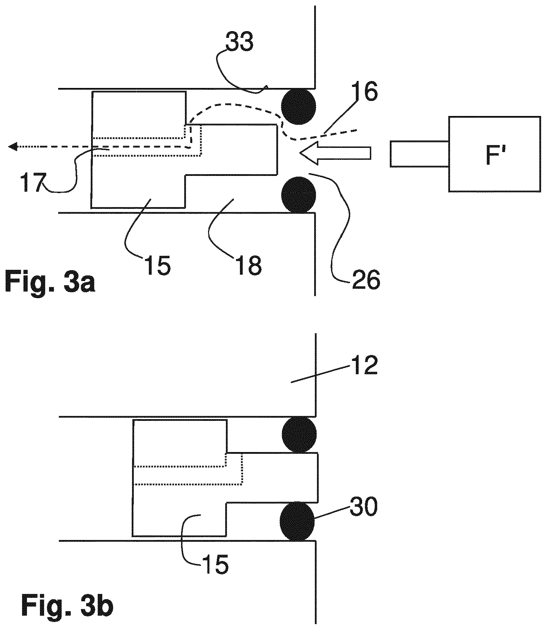

Fig. 2 zeigt den Füllanschluss F mit Füllventil 13. Der Füllanschluss F ist zum Anschluss einer externen Befüllvorrichtung 14 (siehe Figuren 3a und 4) eingerichtet. Das Füllventil 13 ist durch eine externe Befüllvorrichtung mit einem Füllstutzen F' mechanisch entriegelbar indem der Dichtkolben 15 axial zwischen einer in Fig.2 dargestellten Schließposition und einer Öffnungsposition verschoben wird. Hierbei kann beispielsweise ein axiales Betätigungselement des Füllstutzens F', z.B. ein Stift, der externen Befüllvorrichtung 14 einen aus Kunststoff ausgeführten Dichtkolben 15 des Füllventils 13 in das Innere des Füllanschlusses F drücken. Der Füllstutzen F' der externen Befüllvorrichtung 14 korrespondiert dabei mit dem Füllventil 13 des Füllanschlusses F.

Figur 3a zeigt den axial verschiebbaren Dichtkolben 15 bzw. das Füllventil 13 in der Öffnungsposition. Figur 3b zeigt den axial verschiebbaren Dichtkolben 15 bzw. das Füllventil 13 in der Schließposition. Ein Strömungspfad 16 ist in Fig. 3a mit einer gestrichelten Linie angedeutet, die in dem dargestellten Ausführungsbeispiel durch einen Durchgangskanal 17 im Inneren des Dichtkolbens 15 verläuft. Der Strömungspfad 16 kann jedoch auch auf der Außenseite des Dichtkolbens 15 verlaufen. In einer Öffnungsposition, die in Fig. 3a gezeigt, ist der Strömungspfad 16 geöffnet. Hierfür kann der Dichtkolben 15 ein oder mehrere Kanäle 17 (mit punktierten Linien angedeutet) aufweisen, die ein Durchströmen des Füllanschlusses F in der Öffnungsposition erlauben. Der Kolben 15 wird beim Übergang zwischen Schließposition und Öffnungsposition in einem Kolbenkanal 18 verlagert.

Das Füllventil 13 ist derart eingerichtet, dass der Dichtkolben 15 bei Anschluss der externen Befüllvorrichtung von der Schließposition (Fig. 3b) in die Öffnungsposition (Fig. 3a) bewegt wird. Der Dichtkolben 15 wird durch einen im Innern (in der Zeichnung links vom Kolben) herrschenden Systemdruck in die Schließposition (Fig. 3b) gedrängt.

In Fig. 2 ist weiterhin dargestellt, dass das Befüllventil 13 ein Federbauteil 19 in Form einer Schraubenfeder bzw. eine zylindrische Druckfeder 19 umfasst, das/die zwischen dem Dichtkolben 15 und einem Federhaltering 20 angeordnet ist. Das Federbauteil 19 drängt den Dichtkolben 15 in die Schließposition (Fig. 3b), in der sich der Dichtkolben 15 in Fig. 2 befindet. In dem dargestellten Ausführungsbeispiel schlägt in der Schließposition der Dichtkolben 15 bzw. eine systemseitig angeordnete Verbreiterung 33 des Dichtkolbens 15 an einem inneren Haltering 21 an. Dabei weisen die Verbreiterung 33 und der innere Haltering 21 sich entsprechende Konifizierungen, insbesondere genau eine abgeschrägte Fläche, auf, die den Dichtkolben zentrieren und somit in der Schließposition genau positionieren.

Der Dichtkolben 15 ist also derart ausgeführt, dass durch Stecken des Füllstutzens F' (Fig. 4) der Befüllvorrichtung 14 der Strömungspfad 16 (Fig. 3a) freigegeben wird. Dadurch können die an den Verbraucheranschlüssen 11 (Fig. 1) bzw. RES, FL, FR, RL, RR (Fig. 4) angeschlossenen Verbraucher mit Druckluft gefüllt werden, wenn die jeweils zugehörigen Ventile geöffnet sind. Nach dem Entfernen des Füllstutzens F' wird der Dichtkolben 15 wieder durch den Systemdruck und/oder die Federwirkung des Federbauteils 19 in die Schließposition zurückbewegt, so dass der Strömungspfad 16 wieder geschlossen ist (Fig. 3b).

Wie Fig. 2 weiterhin veranschaulicht, wird der Dichtkolben 15 von Haltebauteilen 21, 22, 23 geführt. In dem dargestellten Ausführungsbeispiel sind als Haltebauteile ein innerer Haltering 21, ein äußerer Halteringe 22 sowie eine zwischenliegende Distanzscheibe 23 vorgesehen. Dabei sind vorliegend die Haltringe 21, 22 Drehteile, die aus Metall gefertigt sind, während die Scheibe 23 aus Kunststoff besteht. Die Haltebauteile 21, 22, 23 sind dabei als selbsthaltende Einpressteile ausgebildet, die zur Montage nacheinander in den Ventilkörper 12 bzw. das Füllanschlussgehäuse 24 eingebracht werden können. Ebenso ist auch der Federhaltering 20 als selbsthaltendes Einpressteil ausgebildet. Die Außenseite der Haltebauteile 21, 22, 23 können hierzu eine entsprechende Sägezahnstruktur aufweisen. Dabei weisen in dem dargestellten Ausführungsbeispiel die Haltebauteile 21, 22, 23 voneinander verschiedene Außendurchmesser auf, derart, dass deren Außendurchmesser zunimmt je näher die Haltebauteile 21, 22, 23 jeweils an der Füllöffnung 26 des Füllanschlusses F bzw. des Füllanschlussgehäuses 24 vorgesehen sind. Entsprechend weitet sich auch die Innenseite 25 des Gehäuses 24 des Füllanschlusses F in Richtung der Füllöffnung 26 des Füllanschlusses F bzw. des Füllanschlussgehäuses 24 in korrespondierend stetiger Weise, beispielsweise stufenförmig, so das für jedes der Haltebauteile 21, 22, 23 ein korrespondierender Innendurchmesser und ggf. ein Anschlag auf der Innenseite 25 des Gehäuses 24 gebildet wird, wodurch die Endlage der eingepressten Haltebauteile 21, 22, 23 bei die Montage des Füllventils gut definiert bzw. vorgegeben ist. Entsprechend weist der Federhaltering 20, der systemseitig zu den Haltebauteilen 21, 22, 23 vorgesehen ist, einen kleineren Außendurchmesser als die Haltebauteilen 21, 22, 23 auf. Ebenso weist die Innenseite 25 des Gehäuses 24 des Füllanschlusses F an der für den Federhaltering 20 vorgesehen Einbaustelle einen kleineren Durchmesser auf als an den für die Haltebauteile 21, 22, 23 vorgesehenen Einbaustellen. Alternativ kann anstelle des Federhalterings 20 auch in dem Füllanschluss F bzw. dem Füllanschlussgehäuse 24 selbst ein systemseitiger Anschlag für das Federbauteil 19 ausgebildet sein, so dass auf den Federhaltering 20 verzichtet werden kann.

Der Dichtkolben 15 liegt und bewegt sich in einem Kolbenkanal 18 (Fig. 2 und 3a), der durch das Gehäuse 24 des Füllanschlusses F (Ventilgehäuse) gebildet wird. Der Dichtkolben 15 ist somit unmittelbar in dem Ventilkörper 12 bzw. dem Ventilblock 10 verschiebbar gelagert. Weiterhin sind verschiedene Bauteile des Füllventils 13, wie die Haltebauteile 21, 22, 23 sowie der Federhaltering 20 direkt an dem Gehäuse 24 des Füllanschlusses F und somit direkt an dem Ventilkörper 12 bzw. dem Ventilblock 10 befestigt, wie dies Fig. 2 zeigt.

Bei den Halteringen 21, 22 handelt es sich um zwischen dem Dichtkolben 15 und einer Innenwand 25 des Gehäuses 24 des Füllanschlusses F angeordnete Bauteile und zwar um einen inneren, der Druckfeder bzw. dem Federbauteil 19 nahen, systemseitigen Haltering 21 und einen der Füllöffnung 26 des Füllanschlusses F (Fig. 2, Fig. 3a) nahen, äußeren Haltering 22. Zwischen dem inneren Haltering 21 und dem äußeren Haltering 22 ist die Distanzscheibe 23 angeordnet, die eine Scheibenöffnung aufweist, in der der Dichtkolben 15 aufgenommen wird und/oder anliegt. Eine Außenfläche der Distanzscheibe 23 liegt an einer Innenfläche bzw. Innenwand 25 des Gehäuses 24 des Füllanschlusses F an und ist dort eingepresst. Eine Innenfläche der Scheibenöffnung liegt an einer Außenfläche des Dichtkolbens 15 an und führt diesen. Weiterhin liegt der Dichtkolben 15 auch selbst oder mit der systemseitig angeordnete Verbreiterung 33 an der Innenwand 25 des Gehäuses 24 des Füllanschlusses F an und wird dadurch geführt.

Zur Abdichtung ist das Füllventil 13 des Füllanschlusses F mit einem (ersten) Dichtungselement 30, beispielsweise einem O-Ring 30, versehen, der in dem dargestellten Ausführungsbeispiel axial zwischen dem inneren Haltering 21 und der Distanzscheibe 23 angeordnet ist. In der Schließposition (Fig. 3b) ist der O-Ring 30 radial zwischen Dichtkolben 15 und dem Ventilkörper 12 bzw. der Innenseite 25 des Gehäuses 24 des Füllanschlusses F angeordnet und liegt an diesen an, um den Dichtkolben 15 gegenüber dem Ventilkörper 12 abzudichten, wie dies die Figuren 2 und 3b zeigen.

Das Befüllventil 13 ist in dem dargestellten Ausführungsbeispiel noch mit einem zweiten äußeren Dichtungselement 31, hier dem O-Ring 31 versehen, der nur in Fig. 2 dargestellt ist. Dieser befindet sich in der Schließposition axial auf der Außenseite des Dichtkolbens 15 ist und ist von dem ersten O-Ring 30 durch die Distanzscheibe 23 beabstandet. Der äußere Haltering 22 weist axial wenigstens zwei verschiedene Innendurchmesser auf und schafft dadurch im Querschnitt eine L-förmige Ausnehmung bzw. eine auf der Innenseite des Halterings 22 angeordnete Ausnehmung zur Aufnahme des zweiten, äußeren Dichtungselements 31 (O-Ring 31) und um groben Schmutz und sonstige Umwelteinflüsse fernzuhalten.

In einem nicht dargestellten Ausführungsbeispiel wird auf das zweite, äußere Dichtungselement verzichtet und es ist als einziges Dichtungselement der oben beschriebene erste O-Ring 30 vorgesehen.

Wie die Figuren 2 und 3b zeigen, ist in dem dargestellten Ausführungsbeispiel der Dichtkolben 15 in der Schließposition bündig mit einer Außenseite des Füllanschlusses F angeordnet, was eine optische Positionskontrolle ermöglicht. Alternativ kann der Dichtkolben 15 in der Schließposition auch über die Außenseite des Füllanschlusses F hinausstehen. Weiterhin ist der Ventilkörper 12 als Kunststoffspritzgussteil beispielsweise aus einem thermoplastischen Kunststoff ausgeführt und das Gehäuse 24 des Füllanschlusses F in dem Ventilblockkörper bzw. Ventilkörper 12 integriert und einstückig mit dem Ventilblockkörper bzw. Ventilkörper 12 ausgebildet. Der Ventilblock 10 ist ebenfalls als Kunststoffspritzgussteil beispielsweise aus einer Zwei-Komponenten-Vergussmasse gebildet. In dem beschriebenen Ausführungsbeispiel wird der Ventilblock 10 durch vergießen eines Ventilkörpers 12 geschaffen. Es ist jedoch auch denkbar auf den Ventilkörper 12 zu verzichten, so dass der Ventilblock 10 durch einen einzigen Spritzgussvorgang geschaffen wird, in welchem beispielsweise das Füllanschlussgehäuse 24 geschaffen wird und die Magnetventile für die Druckversorgungs- und Verbraucheranschlüssen umspritzt werden.

Fig. 4 zeigt schematisch ein Luftfederungssystem. Zu erkennen sind die Verbraucher 34, die Lufttrocknungseinheit 35 und der Kompressor 36 des Luftfederungssystems sowie deren elektrische und pneumatische Beschaltung. Weiterhin ist in Fig. 4 schematisch die externe Befüllvorrichtung 14 mit Kompressor K für die Erst- bzw. Wiederbefüllung über den Füllanschluss F dargestellt. Der gestrichelt umrahmte Bereich markiert die Grenzen des Ventilblocks 10 der ein Mehrwegeventil bildet. An pneumatischen Verbindungskanälen 3 sind einerseits die Druckversorgung P und andererseits fünf elektromagnetischen Steuerventile 5 angeschlossen, die ihrerseits jeweils mit einem der Verbraucheranschlüsse FL, FR, RR, RL und RES verbunden sind, um einen freien Strömungsquerschnitt zwischen der Druckversorgung P und dem betreffenden Verbraucheranschluss einstellen zu können. In dem Ventilblock 10 ist des Weiteren ein Drucksensor 7 integriert, der über eine Drucköffnung, die mit dem Verbindungskanal 3 verbunden ist und den Druck im Verbindungskanal 3 misst. Elektrische Leitungen 8 von und zu den Magnetventilen 5 zur Ansteuerung der jeweiligen elektromagnetischen Ventil-Stellantriebe sowie von und zum Drucksensor 7 werden über einen Steckersockel 9 (Fig. 1) mit mehreren entsprechenden elektrischen Kontakten aus dem Ventilblock 10 herausgeführt. Der Füllanschluss F ist hier über einen Füllkanal 32 und mit dem Verbindungskanal 3 und somit mit den Steuerventilen 5 verbunden. In dem Luftfederungssystem ist zudem eine Lufttrocknungseinheit 35 auf Granulatbasis zwischen Ventilblock 10 und Kompressor 36 vorgesehen, die zufließende Luft trocknet und durch abfließende Luft regeneriert.

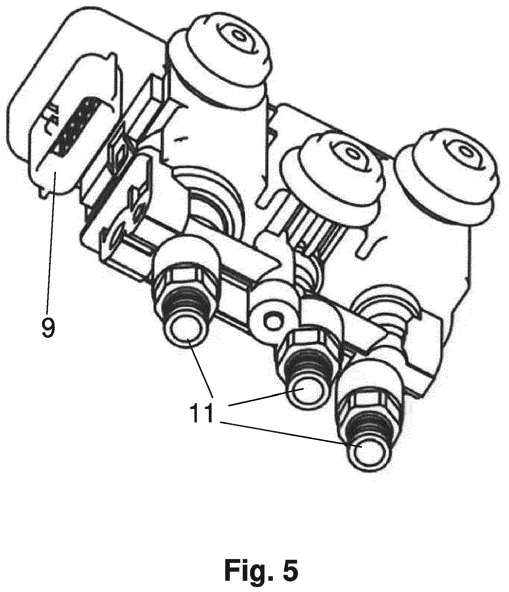

Mit dem Füllanschluss F des Ventilblocks 10 kann Druckluft in das Luftfederungssystem unter Umgehung der Lufttrocknungseinheit 35 und ohne Verwendung des systeminternen Kompressors 36 eingebracht werden. Dabei werden Elektromagnetwegeventile bzw. die Steuer- bzw. Regelventile 5 zu den Luftfederbälgen bzw. Luftfederbeinen geöffnet, wobei darüber die Druckluft in diese Verbraucher strömt. Ist der gewünschte Fülldruck erreicht können das Füllventil 13 und/oder die Steuerventile 5 geschlossen werden. Ein Druckspeicher RES des Luftfederungssystems kann in gleicher Weise befüllt werden. Der Speicher wird üblicherweise mit einem höheren Druckniveau befüllt. Die gesamte Befüllung kann entsprechend geschehen, während bereits der Kompressor 36 mit dem Ventilblock 10 am P-Anschluss verbunden ist, das heißt nach Komplettmontage des Luftfederungssystems. Fig. 5 zeigt analog zu Fig. 1 einen Ventilblock gemäß dem Stand der Technik, der keinen Füllanschluss F aufweist. Hierbei ist keine initiale Befüllung am fertig montierten Luftfederungssystem möglich.

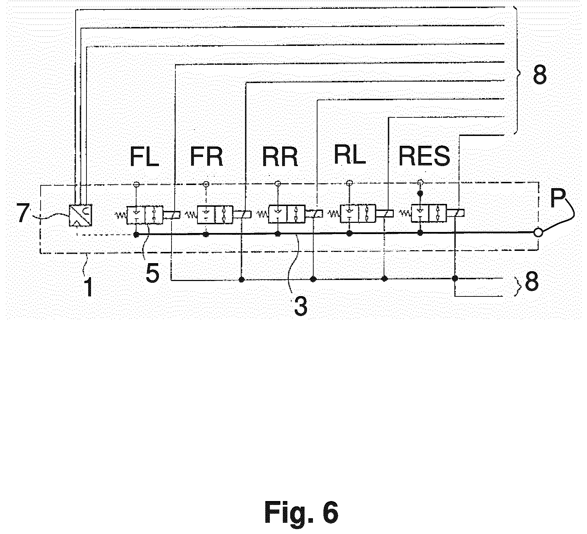

Fig. 6 zeigt analog zu Fig. 4 eine schematische Darstellung eines Luftfederungssystems gemäß dem Stand der Technik, in welchem ein Ventilblock bzw. ein Mehrwegeventil 1 ohne Füllanschluss verbaut ist.

Die Erfindung ist nicht auf die beschriebenen Ausführungsbeispiele beschränkt. So kann der Ventilblock z.B. auch andere Verbraucheranschlüsse oder eine andere Magnetventilanordnung aufweisen. Auch eine Ausführung ohne Druckfeder ist denkbar. Möglich wäre auch eine Ausführung des Ventils 13 als ansteuerbares Magnetventil. Auch mehrere Ventilblöcke könnten in einem System eingesetzt werden.

### Bezugszeichenliste

- 1: Mehrwegeventil
- 3: Verbindungskanäle
- 5: Steuerventile
- 7: Drucksensor
- 8: Elektrische Leitungen
- 9: Steckersockel
- 10: Ventilblock
- 11: Verbraucheranschlüsse
- 12: Ventilblockkörper bzw. Ventilkörper
- 13: Befüllventil
- 14: Befüllvorrichtung
- 15: Dichtkolben
- 16: Strömungspfad
- 17: Kanal (für den Strömungspfad)
- 18: Kolbenkanal
- 19: Federbauteil
- 20: Federhaltering
- 21: erster Haltering
- 22: zweiter Haltering
- 23: Distanzscheibe
- 24: Gehäuse
- 25: Innenwand
- 26: Füllöffnung
- 30: erster O-Ring
- 31: zweiter O-Ring
- 32: Befüllkanal
- 33: Verbreiterung am Dichtkolben 15
- 34: Verbraucher
- 35: Lufttrockeneinheit
- 36: Kompressor (des Fahrzeuges)
- P: Druckversorgungsanschluss
- K: Kompressor (der Befüllvorrichtung)
- F: Füllanschluss
- F': Füllstutzen
- FL: erster Verbraucheranschluss (Federbein vorne links)
- FR: zweiter Verbraucheranschluss (Federbein vorne rechts)
- RR: dritter Verbraucheranschluss (Federbein hinten rechts)
- RL: vierter Verbraucheranschluss (Federbein hinten links)
- RES: fünfter Verbraucheranschluss (Druckspeicher)

## Patentansprüche

1. Ventilkörper (12) für ein Luftfederungssystem
umfassend einen Druckversorgungsanschluss (P) und vorzugsweise Verbraucheranschlüsse (11, RES, FL, FR, RL, RR) und/oder Gehäuse dafür,
**gekennzeichnet durch**
ein zusätzliches Füllanschlussgehäuse (24) zum Ausbilden eines Füllanschlusses (F) zur Befüllung des Luftfederungssystems.

2. Ventilkörper (12) nach Anspruch 1, **dadurch gekennzeichnet, dass** das Füllanschlussgehäuse (24) und/oder die Druckversorgungs- (P) und/oder Verbraucheranschlüsse (11, RES, FL, FR, RL, RR) in dem Ventilkörper (12) integriert ist/ sind, einstückig mit dem Ventilkörper (12) ausgebildet sind, mit dem Ventilkörper fest verbunden und/oder an dem Ventilkörper (12) angeformt ist/ sind, wobei vorzugsweise genau ein Druckversorgungsanschluss (P) und eine Vielzahl von Verbraucheranschlüssen, insbesondere 2, 3, 4 oder 5 Verbraucheranschlüsse vorgesehen sind und/oder der Ventilkörper vorzugsweise als Spritzgussteil bzw. Kunststoffspritzgussteil und/oder einstückig ausgebildet ist.

3. Ventilblock (10) für ein Luftfederungssystem für ein Fahrzeug, umfassend einen Ventilkörper nach Anspruch 1 oder 2 mit Druckversorgungs- (P) und/oder Verbraucheranschlüssen (11, RES, FL, FR, RL, RR),
**gekennzeichnet durch**
einen Füllanschluss (F), der in dem Füllanschlussgehäuse (24) des Ventilkörpers (12) ausgebildet ist.

4. Ventilblock (10) nach Anspruch 3, umfassend genau einen Druckversorgungsanschluss (P) und eine Vielzahl von Verbraucheranschlüssen, insbesondere 2, 3, 4 oder 5 Verbraucheranschlüsse und/oder einen Ventilkörper (12) nach Anspruch 1 oder 2.

5. Ventilblock (10) nach Anspruch 3 oder 4, **dadurch gekennzeichnet, dass** der Füllanschluss (F) ein Füllventil (13) umfasst, wobei der Füllanschluss zum Anschluss einer, insbesondere externen Befüllvorrichtung (14) eingerichtet ist, wobei das Füllventil (13) bevorzugt mechanisch entriegelbar bzw. öffenbar ist, vorzugsweise durch die externe Befüllvorrichtung (14) und/oder wobei das Füllventil (13) vorzugsweise als mechanisches bzw. passives Ventil ausgestaltet ist.

6. Ventilblock (10) nach Anspruch 5, **dadurch gekennzeichnet, dass** das Füllventil einen axial verschiebbaren Dichtkolben (15) aufweist, der in einer Schließposition einen Strömungspfad (16) durch den Füllanschluss (F) schließt und in einer Öffnungsposition den Strömungspfad öffnet, wobei bevorzugt das Füllventil (13) derart eingerichtet ist, dass der Dichtkolben (15) bei bzw. durch Anschluss der Befüllvorrichtung (14) von der Schließposition in die Öffnungsposition bewegt wird, und/oder wobei bevorzugt der Dichtkolben (15) eingerichtet ist durch einen Systemdruck in die Schließposition gedrängt zu werden und/oder wobei bevorzugt das Füllventil (13) ein Federbauteil (19), insbesondere eine Druckfeder bzw. Schraubenfeder, umfasst, das/die den Dichtkolben (15) in die Schließposition drängt.

7. Ventilblock (10) nach Anspruch 6, **dadurch gekennzeichnet, dass** der Dichtkolben (15) von Haltebauteilen geführt wird, insbesondere von einem Haltering oder zwei oder mehr Haltering(en) (21, 22) und/oder einer Scheibe bzw. Distanzscheibe (23), wobei die Haltebauteile (21, 22, 23) bevorzugt direkt in dem Gehäuse (24) des Füllanschlusses (F) befestigt sind und besonders bevorzugt als selbsthaltende Einpressteile ausgebildet sind.

8. Ventilblock (10) nach Anspruch 7, **dadurch gekennzeichnet, dass** die Haltebauteile aus einem inneren (21) und einem äußeren (22) Haltering und einer zwischenliegenden Distanzscheibe (23) bestehen und/oder dass der Dichtkolben (15) aus Kunststoff besteht, und dass die Haltebauteile (20, 21, 22) aus Kunststoff und/oder aus Metall bestehen.

9. Ventilblock (10) nach einem der Ansprüche 6 bis 8, **dadurch gekennzeichnet, dass** das Füllventil (13) des Füllanschlusses (F) mindestens ein erstes Dichtungselement, vorzugsweise einen ersten O-Ring (30), aufweist, das/der bevorzugt axial zwischen dem inneren Haltering (21) und der Distanzscheibe (23) angeordnet ist und/oder in der Schließposition radial zwischen Dichtkolben (15) und dem Ventilkörper (12) angeordnet ist.

10. Ventilblock (10) nach einem der Ansprüche 6 bis 9, **gekennzeichnet durch** ein zweites, äußeres Dichtungselement, vorzugsweise ein O-Ring (31), das/der in der Schließposition radial zwischen der Außenfläche (29) des Dichtkolbens (15) und einer Aussparung des äußeren Halterings (22) angeordnet ist und bevorzugt von dem ersten Dichtungselement bzw. O-Ring (30) durch die Distanzscheibe (23) beabstandet ist.

11. Ventilblock (10) nach einem der Ansprüche 6 bis 10, **dadurch gekennzeichnet, dass** der Dichtkolben (15) in der Schließposition bündig mit einer Außenseite des Füllanschlusses (F) angeordnet ist oder darüber herausragt.

12. Ventilblock (10) nach einem der Ansprüche 3 bis 11, **dadurch gekennzeichnet, dass** jedem Verbraucheranschluss (RES, FL, FR, RL, RR) und vorzugsweise auch dem Druckversorgungsanschluss (P) jeweils ein Steuer- oder Regelventil, insbesondere ein Magnetventil, zugeordnet ist, wobei die Magnetventile bevorzugt mit Kunststoffspritzgussmasse, besonders bevorzugt mit einer Zwei-Komponenten-Kunststoffspritzgussmasse umspritzt sind.

13. Ventilblock (10) nach einem der Ansprüche 3 bis 12, **dadurch gekennzeichnet, dass** der Ventilblock (10) mit einem Kompressor (36) fest verbunden ist, vorzugsweise auf einem gemeinsamen Halter montiert ist.

14. Luftfederungssystem umfassend einen Ventilblock (10) nach einem der Ansprüche 3 bis 13, sowie einen oder mehrere Verbraucher (34), der/die jeweils mit einem Verbraucheranschluss (11, RES, FL, FR, RL, RR) verbunden ist/ sind, sowie einen Kompressor (36), der mit dem Druckversorgungsanschluss (P) verbunden ist, bevorzugt fest verbunden ist, besonders bevorzugt auf einem gemeinsamen Halter montiert ist, wobei vorzugsweise als Verbraucher (34) ein oder mehrere Luftfederbeine oder -bälge und/oder ein Druckspeicher vorgesehen ist/ sind und/oder zwischen Kompressor (36) und Druckversorgungsanschluss (P) eine Lufttrocknungseinheit (35) angeordnet ist, vorzugsweise eine Lufttrocknungseinheit (35) auf Granulatbasis.

15. Verfahren zum Herstellen eines Ventilblocks (10) nach einem der Ansprüche 3 bis 13, umfassend die Schritte:
- Bereitstellen eines Ventilkörpers (12) nach einem der Ansprüche 1 oder 2,
- Bestücken des Ventilkörpers mit Magnetventilen für die Druckversorgungs- und Verbraucheranschlüsse, bevorzugt mit genau einem Magnetventil pro Druckversorgungs- bzw. Verbraucheranschluss, und
- Bestücken des Füllanschlussgehäuses mit einem Füllventil zum Ausbilden des Füllanschlusses, wobei bevorzugt die Bauteile des Füllventils nacheinander bzw. einzeln nacheinander in das Füllanschlussgehäuse eingebracht werden, sowie bevorzugt den weiteren Schritt:
- Umspritzen zumindest der Magnetventile, bevorzugt mit einer Kunststoffspritzgussmasse, besonders bevorzugt mit einer Zwei-Komponenten-Kunststoffspritzgussmasse.

## Claims

1. A valve body (12) for an air suspension system comprising a pressure supply connection (P) and preferably load connections (11, RES, FL, FR, RL, RR) and/or housings therefor,
**characterized by**
an additional filling connection housing (24) for forming a filling connection (F) for filling the air suspension system.

2. The valve body (12) according to claim 1, **characterized in that** the filling connection housing (24) and/or the pressure supply connections (P) and/or load connections (11, RES, FL, FR, RL, RR) is/ are integrated in the valve body (12), is/ are formed in single-piece manner with the valve body (12), firmly connected to the valve body and/or is/ are molded onto the valve body (12), wherein preferably exactly one pressure supply connection (P) and a multiplicity of load connections, in particular 2, 3, 4 or 5 load connections are provided and/or the valve body is preferably formed as an injection-molded part or plastic injection-molded part and/or in single-piece manner.

3. A valve block (10) for an air suspension system for a vehicle, comprising a valve body according to claim 1 or 2 having pressure supply connections (P) and/or load connections (11, RES, FL, FR, RL, RR),
**characterized by** a filling connection (F) formed in the filling connection housing (24) of the valve body (12).

4. The valve block (10) according to claim 3, comprising exactly one pressure supply connection (P) and a multiplicity of load connections, in particular 2, 3, 4 or 5 load connections and/or a valve body (12) according to claim 1 or 2.

5. The valve block (10) according to claim 3 or 4, **characterized in that** the filling connection (F) comprises a filling valve (13), wherein the filling connection is adapted for connecting a filling apparatus (14), in particular an external one, wherein the filing valve (13) can preferably be unlocked or opened mechanically, preferably by the external filling apparatus (14) and/or wherein the filling valve (13) is preferably configured as a mechanical and/or passive valve.

6. The valve block (10) according to claim 5, **characterized in that** the filling valve has an axially displaceable sealing piston (15) which in a closing position closes a flow path (16) through the filling connection (F) and in an opening position opens the flow path, wherein preferably the filling valve (13) is adapted such that the sealing piston (15) is moved from the closing position into the opening position upon or by connecting the filling apparatus (14), and/or wherein preferably the sealing piston (15) is adapted to be urged into the closing position by a system pressure and/or wherein preferably the filling valve (13) comprises a spring component (19), in particular a compression spring or a helical spring, which urges the sealing piston (15) into the closing position.

7. The valve block (10) according to claim 6, **characterized in that** the sealing piston (15) is guided by holding components, in particular by a holding ring or two or more holding ring(s) (21, 22) and/or a disk or spacer disk (23), wherein the holding components (21, 22, 23) are preferably fixed directly in the housing (24) of the filling connection (F) and are particularly preferably formed as self-holding pressed-in parts.

8. The valve block (10) according to claim 7, **characterized in that** the holding components consist of an inner (21) and an outer (22) holding ring and an interposed spacer disk (23) and/or that the sealing piston (15) consists of plastic and that the holding components (20, 21, 22) consist of plastic and/or of metal.

9. The valve block (10) according to any of claims 6 to 8, **characterized in that** the filling valve (13) of the filling connection (F) has at least one first sealing element, preferably a first O-ring (30), which is preferably arranged axially between the inner holding ring (21) and the spacer disk (23) and/or, in the closing position, is arranged radially between the sealing piston (15) and the valve body (12).

10. The valve block (10) according to any of claims 6 to 9, **characterized by** a second, outer sealing element, preferably an O-ring (31) which, in the closing position, is arranged radially between the outer surface (29) of the sealing piston (15) and a recess of the outer holding ring (22) and is preferably spaced apart from the first sealing element or O-ring (30) by the spacer disk (23).

11. The valve block (10) according to any of claims 6 to 10, **characterized in that** the sealing piston (15) is arranged flush with an outer side of the filling connection (F) or projects beyond the latter in the closing position.

12. The valve block (10) according to any of claims 3 to 11, **characterized in that** to each load connection (RES, FL, FR, RL, RR) and preferably also to the pressure supply connection (P) there is allocated respectively one control or regulating valve, in particular a magnetic valve, wherein the magnetic valves are preferably insert molded with a plastic injection-molding compound, particularly preferably with a two-component plastic injection-molding compound.

13. The valve block (10) according to any of claims 3 to 12, **characterized in that** the valve block (10) is firmly connected to a compressor (36), preferably mounted on a common holder.

14. An air suspension system comprising a valve block (10) according to any of claims 3 to 13, and one or several loads (34) which is/ are connected to a load connection (11, RES, FL, FR, RL, RR) in each case, and a compressor (36) which is connected to the pressure supply connection (P), preferably firmly connected, particularly preferably mounted on a common holder, wherein preferably as load (34) there is/ are provided one or several air struts or air bellows and/or a pressure storage and/or an air drying unit (35) is arranged between the compressor (36) and the pressure supply connection (P), preferably an air drying unit (35) on a granulate basis.

15. A method for manufacturing a valve block (10) according to any of claims 3 to 13, comprising the steps of:
- making available a valve body (12) according to either of claims 1 or 2,
- equipping the valve body with magnetic valves for the pressure supply connections and load connections, preferably with exactly one magnetic valve per pressure supply connection and/or load connection, and
- equipping the filling connection housing with a filling valve for forming the filling connection, wherein preferably the components of the filling valve are incorporated in the filling connection housing consecutively and/or individually, and preferably the further step of:
- insert molding at least the magnetic valves, preferably with a plastic injection-molding compound, particularly preferably with a two-component plastic injection-molding compound.

## Revendications

1. Corps de soupape (12) destiné à un système de suspension pneumatique, comprenant un raccordement d'alimentation en pression (P) et de préférence des raccordements de consommateur (11, RES, FL, FR, RL, RR) et/ou des boîtiers pour cela,
**caractérisé par**
un boîtier supplémentaire de raccordement de remplissage (24) pour générer un raccordement de remplissage (F) pour le système de suspension pneumatique.

2. Corps de soupape (12) selon la revendication 1, **caractérisé en ce que** le boîtier de raccordement de remplissage (24) et/ou les raccordements d'alimentation en pression (P) et/ou de consommateur (11, RES, FL, FR, RL, RR) est/sont intégré(s) dans le corps de soupape (12), sont générés en un seul tenant avec le corps de soupape (12), est/sont joints à demeure avec le corps de soupape et/ou épouse(nt) la forme du corps de soupape (12), cependant que, de préférence, exactement un raccordement d'alimentation en pression (P) et une pluralité de raccordements de consommateur, en particulier 2, 3, 4 ou 5 raccordements de consommateur sont prévus et/ou le corps de soupape est généré de préférence sous forme de pièce moulée par injection ou pièce en matière plastique moulée par injection.

3. Bloc de soupapes (10) destiné à un système de suspension pneumatique pour un véhicule, comprenant un corps de soupape selon la revendication 1 ou 2 doté de raccordements d'alimentation en pression (P) et/ou de consommateur (11, RES, FL, FR, RL, RR),
**caractérisé par**
un raccordement de remplissage (F) généré dans le boîtier de raccordement de remplissage (24) du corps de soupape (12).

4. Bloc de soupapes (10) selon la revendication 3, comprenant exactement un raccordement d'alimentation en pression (P) et une pluralité de raccordements de consommateur, en particulier 2, 3, 4 ou 5 raccordements de consommateur et/ou un corps de soupape (12) selon la revendication 1 ou 2.

5. Bloc de soupapes (10) selon la revendication 3 ou 4, **caractérisé en ce que** le raccordement de remplissage (F) comprend une soupape de remplissage (13), cependant que le raccordement de remplissage est conçu pour le raccordement d'un dispositif de remplissage (14) en particulier externe, cependant que la soupape de remplissage (13) peut de préférence être débloquée ou ouverte mécaniquement, de préférence par le dispositif externe de remplissage (14), et/ou cependant que la soupape de remplissage (13) est configurée de préférence sous forme de soupape mécanique ou passive.

6. Bloc de soupapes (10) selon la revendication 5, **caractérisé en ce que** la soupape de remplissage comporte un piston d'étanchéité (15) axialement déplaçable qui, dans une position de fermeture, ferme un chemin d'écoulement (16) à travers le raccordement de remplissage (F), et qui, dans une position d'ouverture, ouvre le chemin d'écoulement, cependant que, de préférence, la soupape de remplissage (13) est conçue de telle façon que le piston d'étanchéité (15), lors du ou par le raccordement du dispositif de remplissage (14), est mû de la position de fermeture à la position d'ouverture, et/ou cependant que, de préférence, le piston d'étanchéité (15) est conçu pour être, par une pression de système, être poussé dans la position de fermeture, et/ou cependant que, de préférence, la soupape de remplissage (13) comprend un composant à ressort (19), en particulier un ressort à pression ou un ressort hélicoïdal, qui pousse le piston d'étanchéité (15) dans la position de fermeture.

7. Bloc de soupapes (10) selon la revendication 6, **caractérisé en ce que** le piston d'étanchéité (15) est guidé par des composants de retenue, en particulier par un anneau de retenue ou par deux ou davantage anneaux de retenue (21, 22) ou un disque ou disque d'écartement (23), cependant que les composants de retenue (21, 22, 23) sont fixés de préférence directement dans le boîtier (24) du raccordement de remplissage (F) et sont particulièrement de préférence générés sous forme de pièces auto-retenues insérées en force.

8. Bloc de soupapes (10) selon la revendication 7, **caractérisé en ce que** les composants de retenue consistent en un anneau de retenue intérieur (21) et un anneau de retenue extérieur (22) et un disque d'écartement (23) situé entre eux, et/ou que le piston d'étanchéité (15) consiste en de la matière plastique, et que les composants de retenue (20, 21, 22) consistent en de la matière plastique et/ou en du métal.

9. Bloc de soupapes (10) selon une des revendications de 6 à 8, **caractérisé en ce que** la soupape de remplissage (13) du raccordement de remplissage (F) comporte au moins un premier élément d'étanchéité, de préférence un premier anneau en O (30), qui est agencé de préférence axialement entre l'anneau de retenue intérieur (21) et le disque d'écartement (23) et/ou est, dans la position de fermeture, agencé radialement entre le piston d'étanchéité (15) et le corps de soupape (12).

10. Bloc de soupapes (10) selon une des revendications de 6 à 9, **caractérisé par** un deuxième élément d'étanchéité, externe, de préférence un anneau en O (31), qui, dans la position de fermeture, est agencé radialement entre la surface extérieure (29) du piston d'étanchéité (15) et un évidement de l'anneau de retenue extérieur (22), et est de préférence, par le disque d'écartement (23), espacé du premier élément d'étanchéité ou anneau en O (30).

11. Bloc de soupapes (10) selon une des revendications de 6 à 10, **caractérisé en ce que** le piston d'étanchéité (15), dans la position de fermeture, est agencé de manière alignée avec une face extérieure du raccordement de remplissage (F) ou en dépasse.

12. Bloc de soupapes (10) selon une des revendications de 3 à 11, **caractérisé en ce que**, à chaque raccordement de consommateur (RES, FL, FR, RL, RR) et de préférence aussi au raccordement d'alimentation en pression (P), respectivement une soupape de commande ou de régulation, en particulier une soupape magnétique, est affectée, cependant que les soupapes magnétiques sont de préférence enrobées par injection avec une matière plastique de moulage par injection, particulièrement de préférence avec une matière plastique à deux composants de moulage par injection.

13. Bloc de soupapes (10) selon une des revendications de 3 à 12, **caractérisé en ce que** le bloc de soupapes (10) est joint à demeure à un compresseur (36), étant de préférence monté sur un support commun.

14. Système de suspension pneumatique, comprenant un bloc de soupapes (10) selon une des revendications de 3 à 13, ainsi qu'un ou plusieurs consommateurs (34) qui est/sont relié(s) respectivement par un raccordement de consommateur (11, RES, FL, FR, RL, RR), ainsi qu'un compresseur (36) joint au raccordement d'alimentation en pression (P), de préférence joint à demeure, particulièrement de préférence monté sur un support commun, cependant que, de préférence, en tant que consommateur (34), un ou plusieurs jambes ou soufflets de suspension pneumatique et/ou un accumulateur de pression est/sont prévu(s), et/ou une unité de séchage d'air (35), de préférence une unité de séchage d'air (35) à base de granulés, est agencée entre le compresseur (36) et le raccordement d'alimentation en pression (P).

15. Procédé de fabrication d'un bloc de soupapes (10) selon une des revendications de 3 à 13, comprenant les étapes :
- mise à disposition d'un corps de soupape (12) selon une des revendications 1 ou 2,
- garnissage du corps de soupape avec des soupapes magnétiques pour les raccordements d'alimentation en pression et de consommateur, de préférence avec exactement une soupape magnétique par raccordement d'alimentation en pression ou de consommateur, et
- garnissage du boîtier de raccordement de remplissage avec une soupape de remplissage pour la génération du raccordement de remplissage, cependant que, de préférence, les composants de la soupape de remplissage sont mis en place les uns après les autres ou individuellement les uns après les autres dans le boîtier de raccordement de remplissage, ainsi que de préférence l'autre étape :
- enrobage par injection d'au moins les soupapes magnétiques, de préférence avec une matière plastique de moulage par injection, particulièrement de préférence avec une matière plastique à deux composants de moulage par injection.
